# EUROPEAN PATENT SPECIFICATION

(11) **EP 4 529 431 B1**
(45) Date of publication and mention of the grant of the patent: **18.11.2026**
(21) Application number: 23710480.7
(22) Date of filing: 02.01.2023
(51) Int. Cl.: A47J 31/40, A47J 31/52

(54) **AN APPLIANCE FOR PREPARING A FRESHLY BREWED HERBAL INFUSION, IN PARTICULAR TEA, A REPLACEABLE CARTRIDGE AND A METHOD FOR PREPARING A FRESHLY BREWED HERBAL INFUSION**
VORRICHTUNG ZUR HERSTELLUNG EINER FRISCH GEBRAUTEN KRÄUTERINFUSION, INSBESONDERE TEE, AUSTAUSCHBARE KARTUSCHE UND VERFAHREN ZUR HERSTELLUNG EINER FRISCH GEBRAUTEN KRÄUTERINFUSION
APPAREIL DE PRÉPARATION D'INFUSION DE PLANTES FRAÎCHES, EN PARTICULIER DE THÉ, CARTOUCHE REMPLAÇABLE ET PROCÉDÉ DE PRÉPARATION D'INFUSION DE PLANTES FRAÎCHES

(30) Priority: 29.04.2022 PL 44106822
(43) Date of publication of application: 02.04.2025
(73) Proprietor: Seize Sp. z o.o., 53-332 Wroclaw (PL)
(72) Inventor: HAPEL, Grzegorz, 55-040 Sleza (PL)
(74) Representative: Gornicki, Pawel
(86) International application number: PCT/PL2023/050001
(87) International publication number: WO 2023/211298

(56) References cited:
- EP-B1- 2 123 201
- CN-A- 110 693 324
- PL-B1- 236 756
- US-A1- 2017 287 257
- US-B2- 10 973 371

## Description

The subject of the invention is an appliance for preparing freshly brewed herbal infusions, particularly leaf teas, including fully automatic storage and dispensing of any leaf teas, heating and dispensing of water at a specific amount and temperature.

The subject of the invention is also an exchangeable cartridge containing active substance for the infusing process.

The invention may find application in the Hotel, Restaurant, Catering/Café (horeca) industry.

Appliance with hot air circulation system for the preparation of beverages with infusing compartments, known from the European patent no. EP1764014, consists of at least one water tank, at least two fluid-combined thermal blocks with at least one water tank, at least two infusing compartments, where each infusing compartment is heated with water from thermal blocks and contains infusion ingredient, and is connected to an outlet for pouring freshly made beverage. The appliance is also fitted with an outlet for hot water adapted to selective connection to each of at least two thermal blocks.

Method and appliance for the preparation of a beverage under controlled pressure is known from the European patent No. EP2001343. Beverage preparation method, characterized in that it comprises the following steps: feed water to the beverage preparation compartment until a pressure of at least 3 bar is reached, interrupt the flow of water into the compartment (pump) at least once, keep the beverage preparation compartment closed at the above pressure throughout pressure holding time, which ranges from 1 to 60 seconds, open the beverage preparation compartment outlet and dispense the beverage. The appliance consists of a beverage preparation compartment; a system for feeding water into the compartment; the means to interrupt the flow of water to the preparation compartment at least once, when the first pressure threshold is reached; the means to resume the flow of water within the previously mentioned set time interval, and the means to open the compartment after the set time has elapsed.

An appliance for preparing hot beverages, in particular coffee or tea, known from European Patent No. EP2254448, comprises a system for circulating a liquid such as water, a means heating such as a burner for supplying combustion heat to the liquid which is circulated to a dispensing outlet, wherein the combustion heating means is associated with the electric heating means for providing electrical heating to the liquid flowing towards the dispensing outlet. The combustion heating means and the electrical heating means are associated with means for regulating the heat supplied to the liquid, such as a temperature sensor. The temperature sensor is designed to measure the temperature of the heated liquid directly or indirectly. The temperature sensor is associated with the electric heating means to regulate the heat supplied by the electric heating based on the difference between the measured temperature and the target temperature, where the combustion heating means and the electric heating means are designed to supply heat energy to heat the liquid in an amount below the heat required for the liquid to reach the target temperature.

Appliances for the preparation of ready-made beverages, generally referred to as tea beverages, are known. Currently, catering establishments rely on appliances that dispense ready-to-drink tea-based beverages, which operate by mixing instant tea or brewed tea concentrate with hot water to form hot and cold water compositions to thereby produce a tea beverage that is ready to drink.

Unfortunately, when beverages are prepared from the concentrate, they often have flavour and aroma that do live up to expectations, especially when the beverage extract or concentrate used has aged.

Therefore, in order to prepare a drink with optimal flavour, appliances for infusing tea leaves are used more and more often. In most cases, these are appliances based on combining dried tea with water in the tank and, after waiting for the appropriate time, the appliance dispenses the infusion.

Patent US2010018403A1 discloses an automatic tea infuser comprising a pot with a basket for the blend which is moved vertically in hot water and additionally subjected to vibration.

Patent CN209107003U discloses a appliance for dispensing leaf tea consisting of a container, a plate placed obliquely therein and a vibrator permanently mounted to the plate, whose vibration frequency can be adjusted to different shapes and types of leaves.

Patent JP6129200B2 discloses a beverage vending machine with a tea infusing assembly comprising a mix dispensing unit with a hopper support whose horizontal top wall holds a number of leaf tea blend hoppers. The leaf tea infusing assembly has an infusing chamber with an upper opening for placing a portion of the blend and a lower wall, an ejector piston with a liquid-permeable head mounted inside the infusing chamber, a scraper for removing a portion of the infused tea blend from the head in an elevated position, a beverage outlet connecting with the infusing chamber through an outlet in the bottom wall and a valve to control the outlet.

Patent CN111067359A discloses a multifunctional automatic tea infuser for home use having a storage column container with a vibrating lid;
Patent CN212569932U discloses a vending machine with quantitative tea dispensing mechanism comprising a tea holding container and a vibrating container for tea grounds connected to the tea holding container inserted and seated at the lower end of the tea container. The front end of the vibrating tea container is equipped with a tea discharging assembly which is connected and fixed to the vibrating tea container by bolts. The vibrating tea container includes a vibrating tea grounds guard. The inserted base is placed at the lower end of the vibrating tea grounds guard. In the vibrating tea grounds guard, there is a tea grounds funnel connected to the tea receptacle, and in the falling tea vibrating shield, there is a tea outlet groove which is formed between the falling tea funnel and the tea outlet assembly.

Publication PL236756B1 discloses an appliance for the preparation of freshly infused herbal beverages, especially tea, comprising a housing, an electronic controller, a blend hopper, metering elements for measuring the exact amount of the infused blend, and a hydraulic system, a hopper constituting a part of the leaf tea blend storage and dispensing module connected to an electronic controller, and the hydraulic system of the water preparation and dispensing module connected to the electronic controller, which includes a water tank with a water level sensor, a steam nozzle with a one-way valve, and the water tank is connected via a solenoid valve with the water source and through the solenoid valve with the heating boiler.

The prior art machines mainly include the leaf tea blend tanks, a beverage infusing chamber, dispensing lines that connect the tanks to the infusing chambers and these to a dispensing nozzle, at least one solenoid valve to control the supply of water to the infusing chamber, metering means for measuring the exact amount of infused leaf tea blend required to obtain a particular beverage and a cleaning component for cleaning the infusing chamber of residues that may be deposited inside the chamber and on its components.

Freshly infused leaf tea blend beverages require a wide range of water temperature that comes into contact with the blend during the infusing process. So, black teas require infusing temperature of about 90°C, green tea with or without the addition of fruit, require infusing temperature of 70-80°C, most dried herbs usually require pouring water with a temperature close to boiling.

Tea drinks are also drinks subject to individual preferences, especially in terms of the intensity of the infusion, which is related to the individual infusing time. This problem has not been overcome so far in infusing machines, generally used in gastronomy, hotels or other public places.

Additionally, due to the inherent nature of the leaf tea blend, a problem which has not yet been overcome is the difficulty of dispensing the correct amount of blend into the infusing module. It stems from the fact that dried tea leaves tend to hang. Tea leaves easily form clumps, which are difficult to loosen, because irregular small fragments of hard dried leaves clump in a tank under gravity, especially in the narrowing of the outlet funnel-shaped bottom.

Therefore, the aim of the invention was to develop such a appliance that would allow for comprehensive overcoming of all problems related to the preparation of freshly infused tea drinks from leaf tea blends, with individual qualities that meet the expectations of consumers.

In order to achieve this goal, an appliance comprising a dispenser for easily clumping materials, such as dried tea leaves, should be developed, which could also be used in a confined space, such as the inside of a horeca machine.

The invention is defined by the appended claims.

The essence of the appliance, according to the invention, is that the appliance is equipped with a hopper for the tea leaf blend, which is a component of the blend storage and dispensing module, connected to the electronic controller. The hopper is equipped with a sloping bottom ended with a hopper outlet, which is connected with a horizontal dispenser by means of a flexible connector, which is contact-connected with the dispensing actuator. The outlet of the horizontal hopper is located above the tilting scale powered by the scale emptying mechanism connected to the electronic controller, and these are elements of the blend portion metering module. Within the tilting range of the scale, there is a collecting cup mounted on a lifting conveyor with a limit switch at its lower and upper ends. These components constitute a leaf tea blend distribution module connected to an electronic controller. The hydraulic system of the water preparation and dispensing module, connected to the electronic controller, includes a water tank with a water level sensor, a steam nozzle with a one-way valve, and the water tank is connected via a solenoid valve 2/2 to the water source and via a solenoid valve 2/2 to the heating boiler, which includes a liquid level sensor, a water temperature sensor and, before the air vent, another solenoid valve 2/2. The heating boiler, a system of hydraulic lines via a pump and another solenoid valve 3/2, are connected through a water flow sensor with a water nozzle located outside the appliance housing, above the place where a cup is placed ready to receive a portion of freshly infused herbal infusion, especially tea..

Preferably, the water preparation and dispensing module includes an additional water circuit located between the pump and the solenoid valve 3/2 controlling the flow of water from the boiler and consisting of an additional solenoid valve 3/2 and a hydraulic line.

Additionally, it is preferable if the water preparation and dispensing module includes an additional heating boiler with a solenoid valve 3/2, connected to the system in series with the first heating boiler.

Preferably, the hopper is adapted to receive a exchangeable cartridge containing a leaf tea blend.

**It** is also preferable if the horizontal dispenser is in the form of a tube whose cross-sectional area is in the range of 1100 mm² to 1600 mm².

**It** is also preferable when the horizontal dispenser is in the form of a tube with a variable cross-section, which narrows towards the end.

**In** addition, it is also preferable if the bottom of the horizontal dispenser is inclined at an angle α ranging from -10° to +20°.

**It** is also preferable that the dispensing actuator is a vibrating electric motor.

Preferably, the tilting scale comprises a trough placed on top.

Preferably, the water connection is a mains connection.

**It** is also preferable that the water connection is made from an external tank with a feed pump.

Preferably, between the pump and the solenoid valve 3/2, an additional solenoid valve 3/2 and an additional water circuit are connected in turn.

In another preferred variant, an additional heating boiler is connected between the water tank and the heating boiler, connected by a common solenoid valve 3/2 to the first heating boiler.

It is also preferable when a leaf tea blend aroma emission module is connected to the electronic controller, which includes a fan located between the hopper and the emission openings located in the appliance housing in an easily accessible place for the customer or in the hopper, the number of the aroma emission modules of the blend of leaf tea corresponds to the number of tea dispensing modules.

The essence of the invention is also an exchangeable loose material cartridge, characterized in that it is made of a food safe transparent material, and its shape corresponds to the shape of the hopper and has a tear-off protection in the form of a strip with an adhesive layer in the section covering the side opening, which coincides with the emission openings and at the bottom, in the part covering the opening of the leaf tea blend, coinciding with the hopper opening, while the remaining section of the strip without glue returns to the top end of the cartridge.

The arrangement of most elements of the hydraulic system inside the appliance, such as boilers, air tank, pump, valves, can be arbitrary.

An advantage of a blend storage and dispensing module designed as described in the present invention is that the shape of the hopper and the location of its outlet prevent the clumping of the leaf tea mix that clumps easily.

An additional advantage is that the appropriate cross-section of the horizontal dispenser and the specification of the dispensing actuator that sets the dispenser in motion allow precise and reproducible dispensing of the leaf tea blend.

The appliance allows the user to determine the flavour of the desired tea infusion in a simple and intuitive way and automatically adjusts the operating parameters of the appliance, preparing single portions of freshly infused tea each time.

The advantage of the hydraulic system as in the appliance is the elimination of steam escaping from the appliance, because steam is additionally used to preheat the water in the tank.

In addition, the advantage of the hydraulic system, as in one of the variants of the invention, is that, thanks to the incorporation of an additional water circuit, it allows each time in a quick and energy-saving way to obtain water of different temperature, suitable for various leaf tea blends. Freshly infused leaf tea blend beverages require a wide range of water temperature that comes into contact with the blend during the infusing process. So, black teas require infusing temperature of about 90°C, green tea with or without the addition of fruit, require infusing temperature of 70-80°C, most dried herbs usually require pouring water with a temperature close to boiling.

Moreover, the method and appliance for automatically preparing a freshly infused beverage from any leaf tea blend, which has been presented above, can be upgraded with any of the modules, thus introducing a number of upgrades for the user of the appliance and how it is operated.

For the purposes of this description, when referring to a leaf tea blend, a reference is made to leaf tea, a fruit tea blend comprising dried fruit particles, a leaf tea blend with dried fruit particles, dried herb blends, and the like.

Below, an example infusing appliance design according to the invention is explained in more detail with reference to the figure. In this figure, the following figures show:

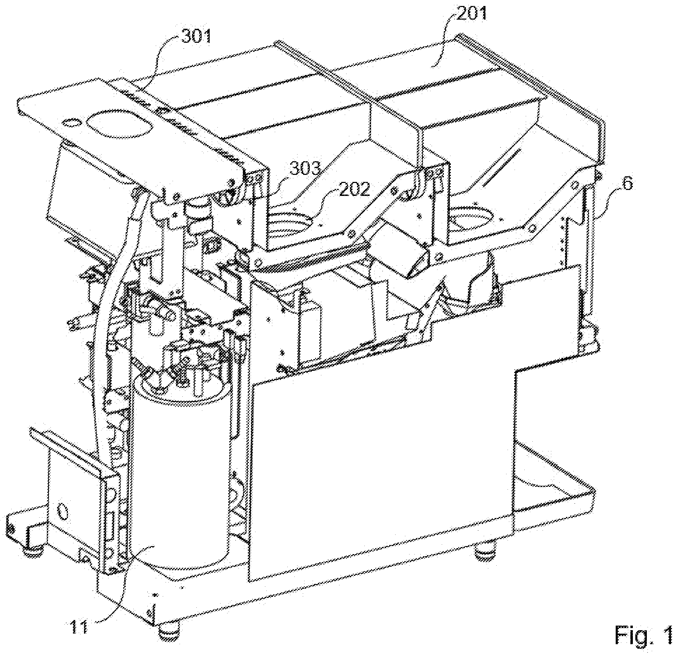

Fig.1 A general view of the appliance according to one of the variants, with the housing removed.

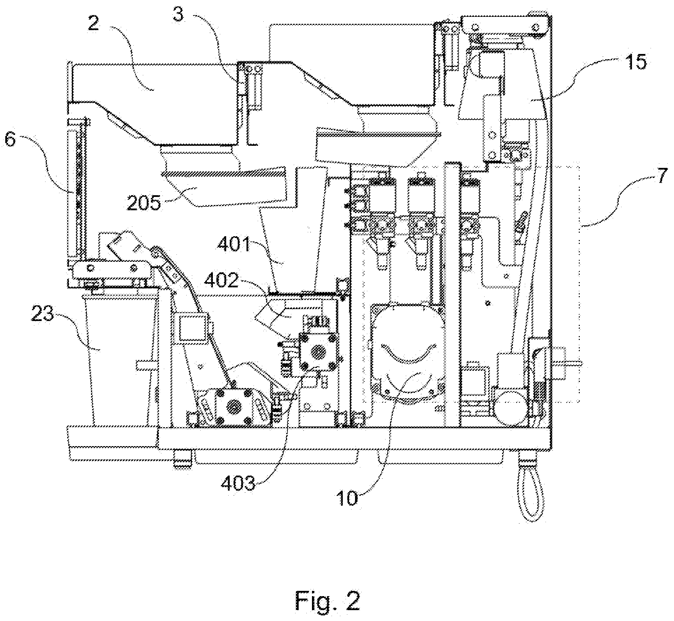

Fig.2 A vertical section of the infusing appliance as in Fig. 1 showing the rest position of the blend dispensing module.
Fig.3 Side view of the blend dispensing module as in Fig.2 with the additional location of the collecting cup marked in the extreme lower position.
Fig. 4. Axonometric view of one of the variants of the horizontal dispenser.
Fig. 5 Top view of the horizontal dispenser as shown in Fig. 3, with marked A-A section.

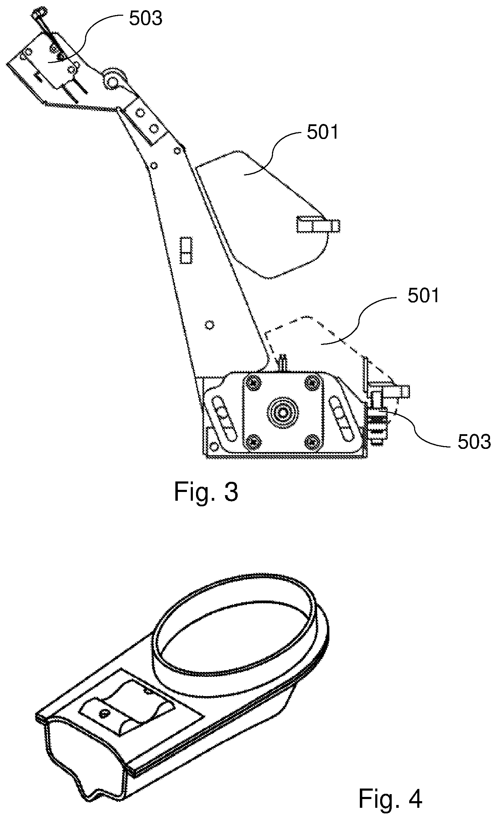

Fig. 6 A-A section AA of the horizontal dispenser as in Fig. 4, with B-B, C-C, D-D sections marked.

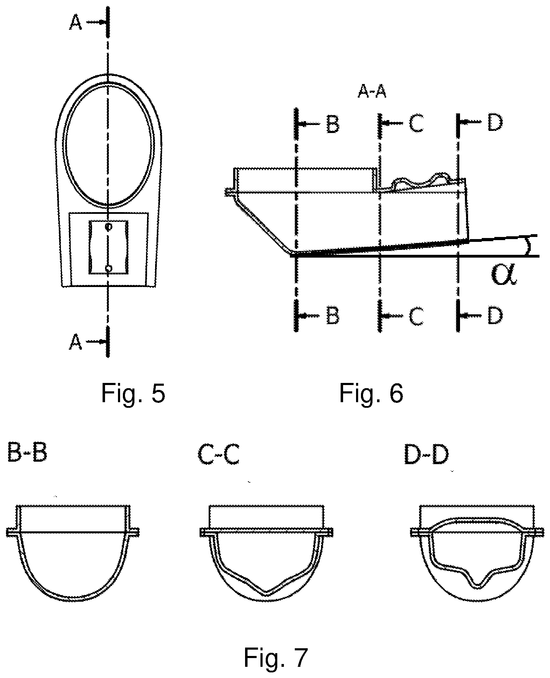

Fig. 7. Cross-sections, in a different plane as in Fig. 5, of the horizontal dispenser, showing the variability of the cross-section along the length of the dispenser.

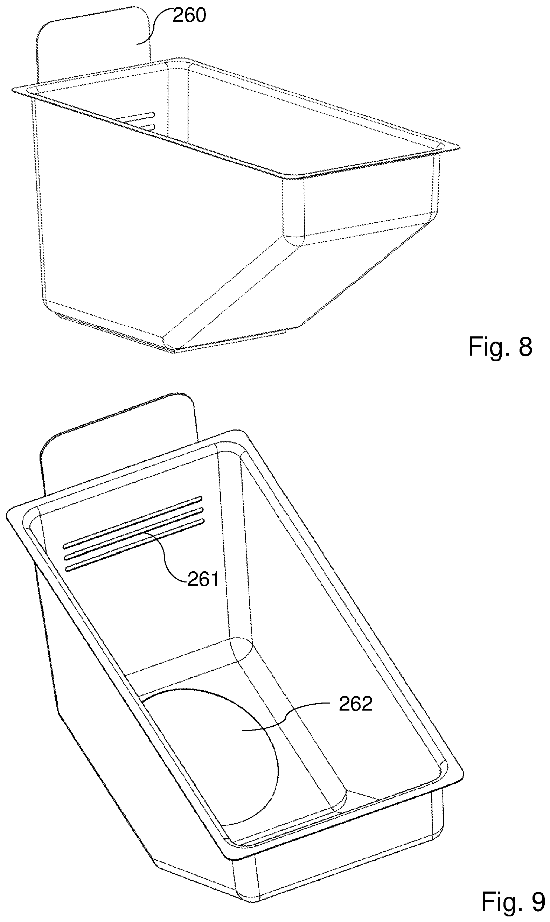

Figures 8 to 10 show different views of the exchangeable cartridge.

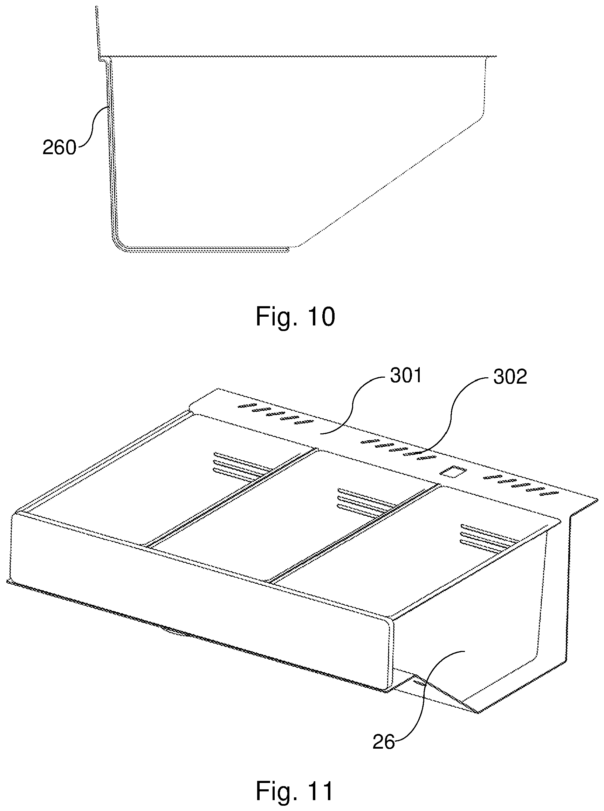

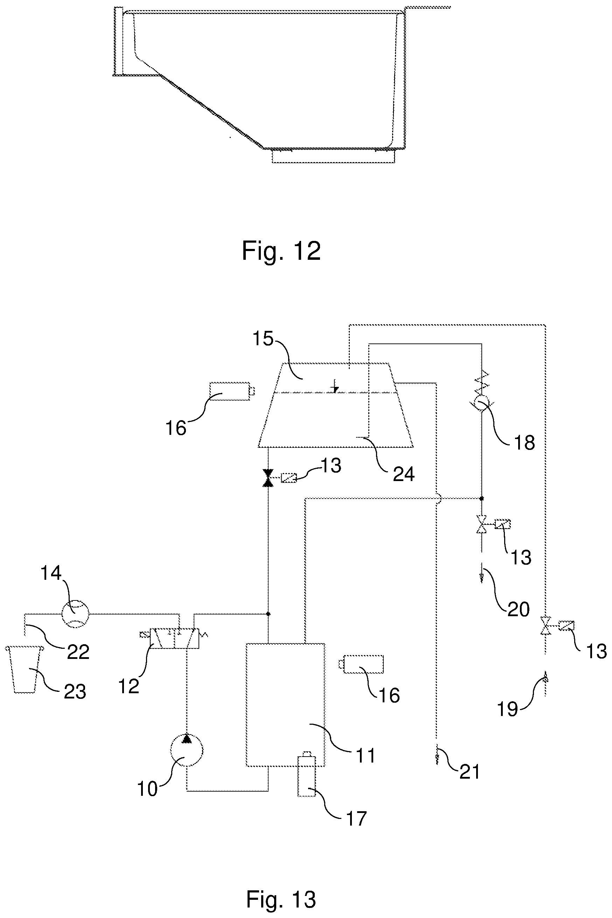

Figures 11 and 12 show a section of hoppers with exchangeable cartridges as shown in Figures 8-10.
Fig. 13 A basic diagram of the hydraulic system.

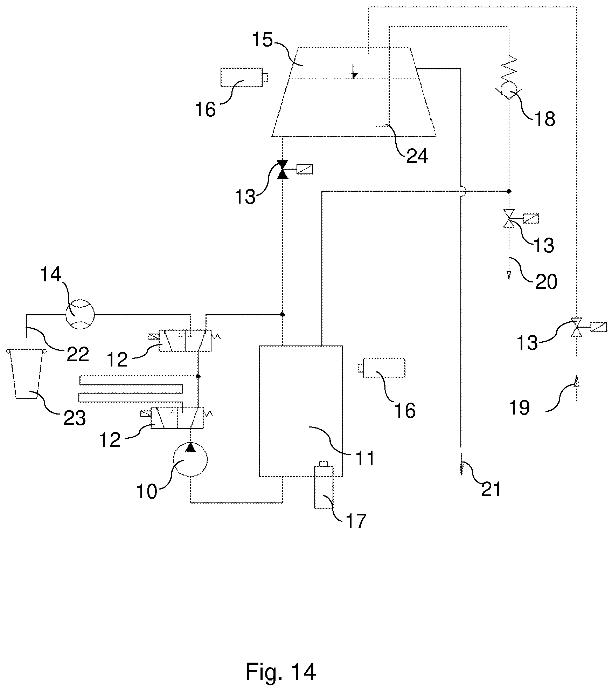

Fig. 14 A diagram of the hydraulic system with an additional heating boiler.

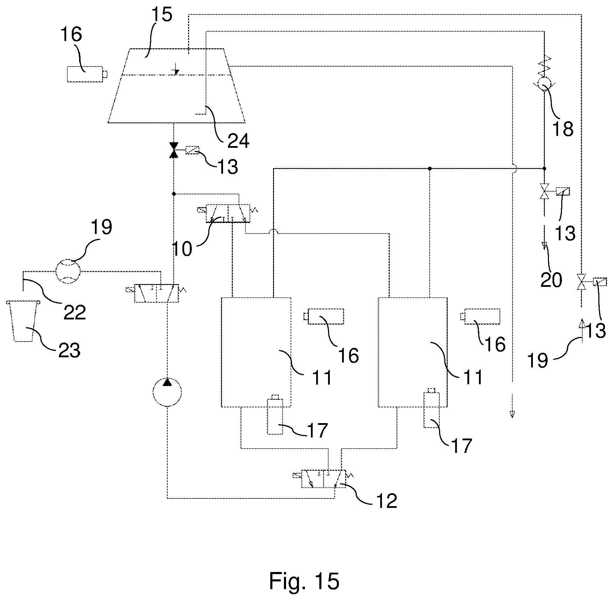

Fig. 15 A diagram of the hydraulic system with an additional water circuit.

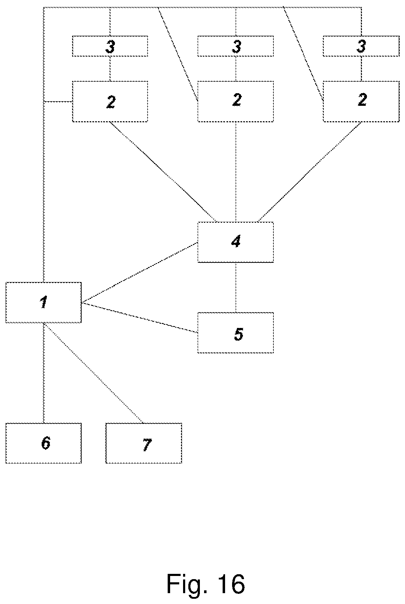

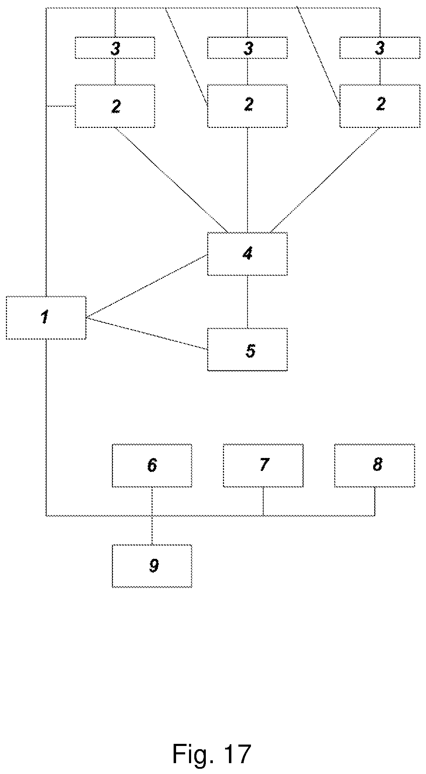

Fig. 16 and Fig. 17 show block diagrams of hydraulic systems of various variants of the invention.

The selected variants of the subject of the invention are also described in detail in the embodiments:

### Embodiment 1:

The appliance for preparing a freshly infused herbal infusion is equipped with a housing, a blend storage and dispensing module **2,** a blend aroma emission module **3,** a blend portion measuring module **4,** a blend dispensing module **5,** a water preparation and dispensing module **7.** The appliance also includes a user interface, payment module **8,** and telemetry and monitoring module **9.** These modules include their operating components, which are connected to the electronic controller **1,** which controls the appliance operation. Outside the housing, on top of the appliance, there is a first section of three blend hoppers **201** arranged side by side, slightly above the first section there is a second section of three blend hoppers **201** also arranged side by side, all made of transparent plastic. Each blend hopper **201** blend has a sloping bottom ending with the hopper discharge opening **202** in the shape of an ellipse with a minor axis similar in width to the width of the hopper **201.** The discharge opening **202** has a flange to which a flexible connector **204** is attached, connecting the hopper **201** with the horizontal dispenser **205,** which is in the form of a horizontal tube of variable cross-section. The cross-sectional area of the dispenser **205** decreases from 1,573 mm² in B-B plane, through 1,238 mm² in C-C plane to 1,178 mm² in D-D plane. The inclination angle α of the discharge opening of the bottom of the horizontal dispenser **205** relative to its lowest point is -7°. A dispensing actuator **206,** which in this variant is a vibrating electric motor, is contact connected to the upper surface of the dispenser **205.** The discharge opening of each horizontal dispenser **205** is located above a chute **401** which acts as a discharge collector for the leaf tea blend. The chute **401** is located directly above the tilting weighing scale **402,** with the scale emptying mechanism **403** connected to the electronic controller **1.** Within the tilting range of the weighing scale **402** there is a collecting cup **501** mounted on a lifting conveyor **502** which is in the form of a toothed belt. There are limit sensors **503** at both ends of the lifting conveyor **502.**

Aroma emission openings **302** are provided in the appliance housing, in a place that is easily accessible for the customer, for example, on the front panel **301.** These openings, depending on the appliance design, may also be located in the hopper **201.** Between the hopper **201** and the emission holes **302,** there is a fan **303** which conveys the aroma of the tea blend to the emission holes **302** through the aroma line **305** and through the aroma valve **304,** An aroma collector **306** may be provided between the aroma lines **305** and the emission openings 302. The hydraulic system of the water preparation and dispensing module **7,** connected to the electronic controller **1,** comprises a water tank **15** with a water level sensor **16,** a steam nozzle **24** with a one-way valve **18.** The water tank **15** is connected via the solenoid valve 2/2 **13** with the water mains connection **19** and via the solenoid valve 2/2 **13** with the heating boiler **11.** The solenoid valve 2/2 is a valve with 2 connections and 2 ways to connect them. The boiler **11** contains a liquid level sensor **16,** a water temperature sensor **17** and, before the air vent **20,** another solenoid valve 2/2 **13.** By means of a system of hydraulic lines via a pump **10** and a solenoid valve 3/2 **12,** the heating boiler **11** is connected via a water flow sensor **14** to a water nozzle **22** located outside the appliance housing, above the place where a cup **23** is placed to dispense a portion of freshly infused herbal infusion, especially tea. The solenoid valve 3/2 has three connections and 2 ways to connect them.

Each hopper **201** may hold a different type of loosely packed leaf tea blend.

After the water tank **15** is filled, the solenoid valve 2/2 **13** opens, which is located between the water tank **15** and the heating boiler **11** and the solenoid valve 2/2 **13** located between the heating boiler **11** and the air vent **20.** Water flows until a signal is received from the liquid level sensor **16** located on the boiler **11.** Then the water tank **15** is refilled. Based on the information from the water level sensor **16** located on the water tank **15,** the water heating starts. The water is heated to the set temperature, which is measured by the water temperature sensor **17** located in the heating boiler **11.** As the water is heated, any steam produced is condensed in the water tank **15,** where it is transferred via the steam nozzle **24** and the one-way valve **18.** In the steam condensation process, the water in the water tank **15** is preheated. Next, the pump **10** is turned on, which removes the cooled water from the hydraulic lines from the previous operating cycle. Once the cooled water is removed from the hydraulic lines, the water temperature in the boiler **11** is measured again and, if necessary, the water is reheated. After reaching the set temperature, the solenoid valve 3/2 **12** and the pump **10** are activated and water is dispensed into the cup **23** through the water nozzle **22.** The amount of dispensed water is monitored by a water flow sensor **14.** When the cycle is completed, the water in the boiler **11** is replenished through the solenoid valve 2/2 **13** located between the water tank **15** and the heating boiler **11** and the solenoid valve 2/2 **13** located between the heating boiler **11** and the air vent **20.** Thanks to this, the water in the boiler **11** is already pre-heated, which effectively reduces the amount of energy needed to heat the water and reduces the heating time. Air is removed from the hydraulic system via the air vent **20.** The emergency water outlet **21** is used to remove the excess amount of water generated during condensation of steam in the water tank **15.**

The electronic control system is processes these signals - limit sensors **503,** water temperature sensors **17,** water level sensors **16** in the water tank **15,** flowmeter **14,** weighing scales **402,** and issues commands to the actuators - dispensing actuator **206,** fan **303** and aroma valve **304** , scale emptying mechanism **403,** lifting conveyor drive **502,** pumps **10,** one-way valves **18,** solenoid valves 3/2 **12,** solenoid valves 2/2 **13,** boiler heating elements **11.** The most important component of the control system is an electronic controller **1.** It controls the execution of control algorithms. Electronic controller **1** is connected to the user communication interface **6** that transmits user commands to the electronic controller **1** for the operation of the appliance for automatic preparation of single servings of freshly brewed infusions from any type of leaf tea. Its second function is to inform the user about the current progress of the brewing process prompting any necessary operations to be performed by the user to ensure proper operation of the appliance. User communication interface **6** can be equipped with control buttons, display, touch screen or a combination thereof. Furthermore, the electronic controller **1** can be connected to a payment module **8** for receiving payment for tea. Cash or card payments are possible. Moreover, electronic controller **1** can be connected to the remote control module for controlling the appliance for automatic preparation of single servings of freshly brewed herbal infusions via any wireless electronic device, e.g. mobile phone, tablet, notebook, etc. Moreover, Service Technician can use the remote control module to perform remote maintenance and testing, for example, clean the water heating and dispensing circuit, restart the appliance, etc. In addition, a telemetry and monitoring module **9** for monitoring and recording appliance's operating status can be connected to the electronic controller **1.** This component transmits current information to the database on the operating parameters, e.g.: the remaining amount of dried tea, number of beverages made, number of remaining cups, which is done via an independent communication channel, such a mobile network.

All systems and modules are connected to each other via an electrical and hydraulic or air systems. Moreover, the components are located and installed inside the housing made of metal and plastic.

Embodiment 2: A appliance as in embodiment 1, except that the hopper **201,** instead of a loosely filled leaf tea blend, holds an exchangeable cartridge **203** for loose material and the cartridge is made of a food safe transparent material, and that its shape corresponds to the shape of the hopper **201** and has a tear-off protection **260** in the form of a strip with an adhesive layer in the section covering the side opening **261** coinciding with the emission openings **302** of the hopper **201.** At the bottom, the strip includes a layer of adhesive in a section covering the opening of the leaf tea blend **262,** which coincides with the opening of the hopper **202.** The remainder of the strip without adhesive is looped back to the top of the cartridge.

Also, the water preparation and dispensing module **7** includes an additional water circuit **25** located between the pump **10** and the solenoid valve 3/2 **12** controlling the flow of water from the boiler **11.** The additional water circuit **25** comprises an additional solenoid valve 3/2 **12** and a hydraulic line. In this variant, the water connection **19** is provided from an external tank with a feed pump.

The water circulation is carried out in the hydraulic system as shown in Fig. 14.

It functions in the same way as in embodiment 1, with the difference that after heating the water in the heating boiler **11,** the solenoid valve 3/2 **12** located at the outlet of the pump **10** opens, and the pump **10** turns on and the cooled water is removed from the hydraulic lines. Then, once the cooled water is removed from the hydraulic lines, the water temperature in the heating boiler **11** is measured again and, if necessary, the water is reheated to a pre-set temperature. At this point in the cycle, water is dispensed into the cup **23** by switching on the solenoid valve 3/2 **12** located closer to the heating boiler and, depending on the selection of the type of tea (black or green), which determines the infusing temperature, the solenoid valve 3/2 **12** located closer to the outlet of the pumps **10** is turned on or not. The amount of dispensed water is monitored by a water flow sensor **14.** When the cycle is completed, the water in the heating boiler **11** is replenished through the valve **13** located between the tank **15** and the heating boiler **11** and the solenoid valve 2/2 **13** located between the heating boiler **11** and the air vent **20.** Thanks to this, the water in the heating boiler **11** is already pre-heated, which effectively reduces the amount of energy needed to heat the water and reduces the heating time.

Embodiment 3: The appliance as in embodiment 1, except that the water preparation and dispensing module **7,** apart from the additional heating boiler **11** with the solenoid valve 3/2 **12,** is connected in series to the first heating boiler **11** The appliance as in embodiment 1, where the water circulation is accomplished in the hydraulic system as in Fig. 15. In this hydraulic system, two heating boilers **11** are used, which alternately heat and dispense water, which allows to reduce the time of dispensing water to the cup **23.** The system duty cycle is similar to those described above.

The list of items in figures:
1 - electronic controller
2 - blend storage and dispensing module
   201 - hopper
   202 - hopper discharge opening
   203 - cartridge
   204 - flexible connector
   205 - horizontal dispenser
   206 - dispensing actuator
3 - blend aroma emission module
   301 - front panel
   302 - emission opening
   303 - fan
   304 - aroma valve
   305 - aroma line
   306 - aroma collector
4 - blend portion metering module.
   401 - chute
   402 - weighing scale
   403 - weighing scale emptying mechanism
5 - blend dispensing module
   501 - collecting cup
   502 - lifting conveyor
   503 - limit switch
6 - User Interface
7 - water preparation and dispensing module
8 - payment module
9 - telemetry and monitoring module
10 - pump
11 - heating boiler
12 - solenoid valve 3/2
13 - solenoid valve 2/2
14 - flow meter
15 - water tank
16 - water level sensor
17 - water temperature sensor
18 - one-way valve
19 - water connection
20 - air vent
21 - emergency water outlet
22 - water nozzle
23 - cup
24 - steam nozzle
25 - additional water circulation
26 - exchangeable cartridge
   260 - tear-off protection
   261 - side opening
   262 - the leaf tea blend opening

## Claims

1. An appliance for the preparation of freshly infused herbal beverages, especially tea, comprising a housing, an electronic controller (1), a blend hopper (201), metering elements (4, 401, 402, 403) for measuring the exact amount of the infused blend, and a water preparation and dispensing module (7) comprising a hydraulic system, a leaf tea blend storage and dispensing module (2), a leaf tea blend portion metering module (4), a leaf tea blend dispensing module (5), the hopper (201) constituting a part of the leaf tea blend storage and dispensing module (2) connected to an electronic controller (1), having a sloping bottom ending with a hopper discharge opening (202), which is connected with a flexible connector (204) to a horizontal dispenser (205), which is contact-connected with an actuator (206), and the discharge opening of the horizontal dispenser (205) is located above the tilting weighing scale (402) with a scale emptying mechanism (403) connected to the electronic controller (1), and within the tilting range of the scale (402) being parts of the leaf tea blend portion metering module (4), there is a collecting cup (501) fixed on the a lifting conveyor (502) having at the lower and upper ends a limit sensor (503), constituting elements of the leaf tea blend dispensing module (5) connected to the electronic controller (1), and the hydraulic system of the water preparation and dispensing module (7) connected to the electronic controller (1), said hydraulic system includes a water tank (15) with a water level sensor (16), a steam nozzle (24) with a one-way valve (18), a heating boiler (11), and the water tank (15) is connected via a solenoid valve 2/2 (13) with a water source (19) and through the solenoid valve 2/2 (13) with the heating boiler (11), which includes a liquid level sensor (16), a water temperature sensor (17) and before the air vent (20), another solenoid valve 2/ 2 (13), and the heating boiler (11) through a water flow sensor (14) is connected by a system of hydraulic lines through a pump (10) and another solenoid valve 3/2 (12) with a water nozzle (22) located outside appliance housing, above the place where a cup (23) is placed for a portion of freshly infused herbal beverage, especially tea.

2. The appliance according to claim 1, **characterized in that** the water preparation and dispensing module (7) includes an additional water circuit (25) located between the pump (10) and the solenoid valve 3/2 (12) controlling the flow of water from the boiler (11) comprising an additional solenoid valve 3/2 (12) and the hydraulic line.

3. The appliance according to claim 1 or 2, **characterized in that** the water preparation and dispensing module (7) includes an additional heating boiler (11) with a solenoid valve 3/2 (12), connected in series to the first heating boiler (11).

4. The appliance according to claim 1, **characterized in that** the hopper (201) is designed to receive an exchangeable cartridge (26) containing a leaf tea blend.

5. The appliance according to claim 1, **characterized in that** the horizontal dispenser (205) is in the form of a tube whose cross-sectional area is in the range from 1,100 mm² to 1,600 mm².

6. The appliance according to claim 5, **characterized in that** the horizontal dispenser (205) is in the form of a tube with a variable cross-section, narrowing towards the end.

7. The appliance according to claim 5 or 6, **characterized in that** the bottom of the horizontal dispenser (205) is inclined at an angle α ranging from -10° to +20°.

8. The appliance of claim 1, **characterized in that** the dispensing actuator (206) is a vibrating electric motor.

9. The appliance according to claim 1, **characterized in that** the tilting weighing scale (402) comprises a chute (401) located on top.

10. The appliance according to claim 1, **characterized in that** the water connection (19) is a mains connection.

11. The appliance according to claim 1, **characterized in that** the water connection (19) is an external tank with a feed pump.

12. The appliance according to claim 1, **characterized in that** between the pump (10) and the solenoid valve 3/2 (12) an additional solenoid valve 3/2 (12) and an additional water circuit (25) are provided.

13. The appliance according to claim 1, **characterized in that** between the water tank (15) and the heating boiler (11) an additional heating boiler (11) is provided, connected with the first heating boiler (11) by a common solenoid valve 3/2 (12).

14. The appliance according to claim 1, **characterized in that** the leaf tea blend aroma emitting module (3) is connected to the electronic controller (1), and the module comprises a fan (303) located between the hopper (201) and the emission openings (302) located in the appliance housing in a location easily accessible for the customer or in the hopper (201), and the number of leaf tea blend aroma emission modules (3) corresponds to the number of tea dispensing modules (2).

15. An exchangeable cartridge (26) for the appliance according to one of the preceding claims, wherein the cartridge contains active substances for the infusing process, **characterized in that** it is made of a food safe transparent material and its shape corresponds to the shape of the hopper (201) and has a tear-off protection (260), a side opening (261) and a leaf tea blend discharge opening (262), the tear-off protection being in the in the form of a strip comprising a layer of adhesive in the part covering the side opening (261) coinciding with the hopper emission openings (302) and at the bottom in the part covering the leaf tea blend discharge opening (262) coinciding with the hopper discharge opening (202), while the rest of the strip without adhesive is looped back to the top of the cartridge.

## Patentansprüche

1. Gerät zur Zubereitung von frisch aufgegossenen Kräutergetränken, insbesondere Tee, mit einem Gehäuse, einer elektronischen Steuerung (1), einem Mischtrichter (201), Dosierelementen (4, 401, 402, 403) zur Dosierung der exakten Menge der Aufgussmischung sowie ein Wasseraufbereitungs- und Wasserausgabemodul (7) mit einem Hydrauliksystem, einem Aufbewahrungs- und Ausgabemodul (2) für Blattteemischungen, einem Portionsmodul (4) für Blattteemischungen, einem Ausgabemodul (5) für Blattteemischungen, einem Trichter (201), der einen Teil des Aufbewahrungs- und Ausgabemoduls (2) für Blattteemischungen bildet und mit einer elektronischen Steuerung (1) verbunden ist, mit einem schrägen Boden, der in einer Trichterauslassöffnung (202) endet, welche über einen flexiblen Verbindungsschlauch (204) mit einem horizontalen Spender (205) verbunden ist, das kontaktmäßig mit einem Aktuator (206) verbunden ist, und die Auslassöffnung des horizontalen Spenders (205) befindet sich über der kippbaren Waage (402) mit Entleerungsmechanismus (403), der mit der elektronischen Steuerung (1) verbunden ist, und innerhalb des Kippbereichs der Waage (402), die Teil des Moduls zur Dosierung von Blattteemischungen (4) ist, gibt es einen Auffangbecher (501), der an einem Hubförderer (502) befestigt ist, der an seinem unteren und oberen Ende einen Endschalter (503) aufweist, welche Elemente des Ausgabemoduls für Blattteemischungen (5) bilden, das mit der elektronischen Steuerung (1) verbunden ist, und das Hydrauliksystem des Wasseraufbereitungs- und Wasserausgabemoduls (7), das mit der elektronischen Steuerung (1) verbunden ist, wobei das Hydrauliksystem einen Wassertank (15) mit einem Wasserstandssensor (16), eine Dampfdüse (24) mit einem Rückschlagventil (18) und einen Heizkessel (11) umfasst und der Wassertank (15) über ein 2/2-Magnetventil (13) mit einer Wasserquelle (19) und über das 2/2-Magnetventil (13) mit dem Heizkessel (11) verbunden ist, der einen Flüssigkeitsstandsensor (16), einen Wassertemperatursensor (17) und vor dem Entlüftungsventil (20) ein weiteres 2/2-Magnetventil (13) umfasst, und der Heizkessel (11) ist über einen Wasserdurchflusssensor (14) durch ein System von Hydraulikleitungen über eine Pumpe (10) und ein weiteres 3/2-Magnetventil (12) mit einer Wasserdüse (22) verbunden, die sich außerhalb des Gerätegehäuses oberhalb der Stelle befindet, an der eine Tasse (23) für eine Portion frisch aufgegossenes Kräutergetränk, insbesondere Tee, platziert wird.

2. Das Gerät nach Anspruch 1, **dadurch gekennzeichnet, dass** das Wasseraufbereitungs- und Wasserausgabemodul (7) einen zusätzlichen Wasserkreislauf (25) umfasst, der zwischen der Pumpe (10) und dem den Wasserfluss aus dem Heizkessel (11) steuernden 3/2-Magnetventil (12) angeordnet ist und ein zusätzliches 3/2-Magnetventil (12) sowie die Hydraulikleitung umfasst.

3. Das Gerät nach Anspruch 1 oder 2, **dadurch gekennzeichnet, dass** das Wasseraufbereitungs- und Wasserausgabemodul (7) einen zusätzlichen Heizkessel (11) mit einem 3/2-Magnetventil (12) umfasst, der in Reihe mit dem ersten Heizkessel (11) geschaltet ist.

4. Das Gerät nach Anspruch 1, **dadurch gekennzeichnet, dass** der Trichter (201) zur Aufnahme einer austauschbaren Kartusche (26) ausgelegt ist, die eine Blattteemischung enthält.

5. Das Gerät nach Anspruch 1, **dadurch gekennzeichnet, dass** der horizontale Spender (205) die Form eines Rohrs aufweist, dessen Querschnittsfläche im Bereich von 1.100 mm² bis 1.600 mm² liegt.

6. Das Gerät nach Anspruch 5, **dadurch gekennzeichnet, dass** der horizontale Spender (205) die Form eines Rohrs mit variablem Querschnitt hat, das sich zum Ende hin verjüngt.

7. Das Gerät nach Anspruch 5 oder 6, **dadurch gekennzeichnet, dass** der Boden des horizontalen Spenders (205) in einem Winkel α von -10° bis +20° geneigt ist.

8. Das Gerät nach Anspruch 1, **dadurch gekennzeichnet, dass** der Ausgabeaktuator (206) ein vibrierender Elektromotor ist.

9. Das Gerät nach Anspruch 1, **dadurch gekennzeichnet, dass** die kippbare Waage (402) eine oben angeordnete Rutsche (401) umfasst.

10. Das Gerät nach Anspruch 1, **dadurch gekennzeichnet, dass** der Wasseranschluss (19) ein Netzanschluss ist.

11. Das Gerät nach Anspruch 1, **dadurch gekennzeichnet, dass** der Wasseranschluss (19) ein externer Tank mit einer Förderpumpe ist.

12. Das Gerät nach Anspruch 1, **dadurch gekennzeichnet, dass** sich zwischen der Pumpe (10) und dem 3/2-Magnetventil (12) ein zusätzliches 3/2-Magnetventil (12) und ein zusätzlicher Wasserkreislauf (25) befinden.

13. Das Gerät nach Anspruch 1, **dadurch gekennzeichnet, dass** sich zwischen dem Wassertank (15) und dem Heizkessel (11) ein zusätzlicher Heizkessel (11) befindet, der über ein gemeinsames 3/2-Magnetventil (12) mit dem ersten Heizkessel (11) verbunden ist.

14. Das Gerät nach Anspruch 1, **dadurch gekennzeichnet, dass** das Aromamodul (3) für die Blattteemischung mit der elektronischen Steuerung (1) verbunden ist, und das Modul einen Ventilator (303) umfasst, der zwischen dem Trichter (201) und den Auslassöffnungen (302) angeordnet ist, die sich im Gehäuse des Geräts an einer für den Kunden leicht zugänglichen Stelle oder im Trichter (201) befinden, und die Anzahl der Aromamodule (3) für die Blattteemischung der Anzahl der Teespender (2) entspricht.

15. Eine austauschbare Kartusche (26) für das Gerät nach einem der vorstehenden Ansprüche, wobei die Kartusche Wirkstoffe für den Aufgussvorgang enthält, **dadurch gekennzeichnet, dass** sie aus einem lebensmittelechten, transparenten Material besteht und ihre Form der Form des Trichters (201) entspricht und einen Abreißschutz (260), eine seitliche Öffnung (261) und eine Auslassöffnung (262) für die Blattteemischung aufweist, wobei der Abreißschutz in Form eines Streifens ausgebildet ist, der eine Klebeschicht in dem die Seitenöffnung (261) abdeckenden Teil aufweist, der mit den Auslassöffnungen (302) des Trichters zusammenfällt, sowie am Boden in dem die Auslassöffnung (262) für die Blattteemischung abdeckenden Teil, der mit der Auslassöffnung (202) des Trichters zusammenfällt, während der Rest des Streifens ohne Klebstoff zur Oberseite der Kartusche zurückgeschlagen ist.

## Revendications

1. Un appareil destiné à la préparation de boissons aux herbes fraichement infusées, notamment le thé, comportant un boitier, une commande électronique (1), une trémie de mélange (201), des éléments de dosage (4, 401, 402, 403) pour le dosage de la quantité exacte du mélange infusé, et un module de préparation et de distribution (7) comprenant un système hydraulique, un compartiment pour les feuilles de thé et un module de distribution (2), un module de dosage des feuilles de thé (4), un module de distribution des feuilles de thé (5), une trémie (201) constituant une partie du compartiment pour les feuilles de thé et du module de distribution (2) connectée à une commande électronique (1), possédant un fond incliné à l'extrémité duquel se trouve l'ouverture de vidange de la trémie (202), qui est connectée avec un raccord flexible (204) au distributeur horizontal (205), qui est connecté à un actionneur (206), et l'ouverture de déchargement du distributeur horizontal (205) se situe au-dessus de la balance de pesage inclinable (402) avec un mécanisme de vidange de la balance (403) connecté à la commande électronique (1), et dans la balance de pesage inclinable (402) faisant partie du module de dosage des feuilles de thé (4), se trouve un bac collecteur (501) fixé à un transporteur élévateur (502) possédant à ses extrémités inférieure et supérieure un capteur de butée (503), constituant l'un des éléments du module de distribution des feuilles de thé (5) connecté à la commande électronique (1), et le système hydraulique du module de préparation de l'eau de distribution (7) connecté à la commande électronique (1), ledit système hydraulique comprenant un réservoir d'eau (15) avec un capteur du niveau d'eau (16), un bec vapeur (24) avec une valve anti-retour (18), une chaudière (11) et le réservoir d'eau (15) est connecté par une électrovanne 2/2 (13) à une source d'eau (19) et au moyen de l'électrovanne 2/2 (13) à la chaudière (11), qui comprend un capteur du niveau de liquide (16), un capteur de la température de l'eau (17) et en amont de l'aération (20), une autre électrovanne 2/ 2 (13), et la chaudière (11) à travers d'un capteur du débit d'eau (14) est connectée par un système de conduites hydrauliques à travers une pompe (10) et une autre électrovanne 3/2 (12) avec un bec eau (22) situé à l'extérieur du boitier de l'appareil, au-dessus de l'endroit où une tasse (23) est placée pour y verser une boisson aux herbes fraichement infusée, notamment le thé.

2. L'appareil selon la revendication 1, **caractérisé en ce que** le module de préparation d'eau et distribution (7) comprend un circuit d'eau supplémentaire (25) situé entre la pompe (10) et l'électrovanne 3/2 (12) contrôlant le débit d'eau de la chaudière (11) comprenant une électrovanne supplémentaire 3/2 (12) et la conduite hydraulique.

3. L'appareil selon les revendications 1 ou 2, **caractérisé en ce que** le module de préparation d'eau et distribution (7) comprend une chaudière supplémentaire (11) avec une électrovanne 3/2 (12), connectée en série à la première chaudière (11).

4. L'appareil selon la revendication 1, **caractérisé en ce que** la trémie (201) est conçue pour contenir une cartouche échangeable (26) contenant un mélange de feuilles de thé.

5. L'appareil selon la revendication 1, **caractérisé en ce que** le distributeur horizontal (205) est en forme de tube dont la section transversale est comprise entre 1,100 mm² à 1,600 mm².

6. L'appareil selon la revendication 5, **caractérisé en ce que** le distributeur horizontal (205) est en forme de tube dont la section transversale change, se rétrécissant vers l'extrémité.

7. L'appareil selon la revendication 5 ou 6, **caractérisé en ce que** le fond du distributeur horizontal (205) est incliné à un angle **α** de -10° à +20°.

8. L'appareil de la revendication 1, **caractérisé en ce que** l'actionneur de distribution (206) est un moteur vibrant électrique.

9. L'appareil selon la revendication 1, **caractérisé en ce que** la balance de pesage inclinable (402) comprend une glissière (401) située au-dessus.

10. L'appareil selon la revendication 1, **caractérisé en ce que** le raccord d'eau (19) est un raccordement au réseau.

11. L'appareil selon la revendication 1, **caractérisé en ce que** le raccord d'eau (19) est un réservoir externe avec une pompe d'alimentation.

12. L'appareil selon la revendication 1, **caractérisé en ce que**, entre la pompe (10) et l'électrovanne 3/2 (12), une électrovanne supplémentaire 3/2 (12) et un circuit d'eau supplémentaire (25) sont assurés.

13. L'appareil selon la revendication 1, **caractérisé en ce que**, entre le réservoir d'eau (15) et la chaudière (11), une chaudière supplémentaire (11) est assurée, connectée à la première chaudière (11) par une électrovanne normale 3/2 (12).

14. L'appareil selon la revendication 1, **caractérisé en ce que** le module émettant l'arôme du mélange de feuilles de thé (3) est connecté à la commande électronique (1), et le module comprend un ventilateur (303) situé entre la trémie (201) et les orifices d'émission (302) situés dans le boitier de l'appareil à un endroit facilement accessible pour le client ou dans la trémie (201), et le nombre de modules émettant l'arôme du mélange de feuilles de thé (3) correspond au nombre de module de distribution de thé (2).

15. Une cartouche échangeable (26) pour l'appareil selon l'une des revendications précédentes, où la cartouche contient des substances actives pour le processus d'infusion, **caractérisée en ce qu'**elle est fabriquée en une matière transparente autorisée à entrer en contact avec les aliments et sa forme correspond à la forme de la trémie (201) et elle possède une protection contre l'arrachement (260), une ouverture latérale (261) et une ouverture de vidange du mélange de feuilles de thé (262), la protection contre l'arrachement se présentant sous la forme d'une bandelette comprenant une couche adhésive sur la partie couvrant l'ouverture latérale (261) coïncidant avec les ouvertures d'émission de la trémie (302) et, au fond, sur la partie couvrant l'ouverture de vidange du mélange de feuilles de thé (262) coïncidant avec l'ouverture de vidange de la trémie (202), tandis que le reste de la bandelette sans la couche adhésive est relié à la partie supérieure de la cartouche.
